# EUROPÄISCHE PATENTSCHRIFT

(11) **EP 1 481 586 B1**
(45) Veröffentlichungstag und Bekanntmachung des Hinweises auf die Patenterteilung: **04.10.2006**
(21) Anmeldenummer: 04102161.9
(22) Anmeldetag: 17.05.2004
(51) Int. Cl.: A01M 7/00

(54) **Gestängekonstruktion und Verfahren zur Herstellung einer solchen**
Boom structure and method for making such a structure
Structure de rampe et méthode de fabrication d'une telle structure

(30) Priorität: 27.05.2003 US 445678
(43) Veröffentlichungstag der Anmeldung: 01.12.2004
(73) Patentinhaber: DEERE & COMPANY, Moline, Illinois 61265-8098 (US)
(72) Erfinder: Wubben, Thomas Mark, Ankeny, IA Iowa 50021 (US); Klemme, Kent Alvin, Ankeny, IA 50021 (US); Stephens, Brenden Lew, Urbandale, IA 50322 (US); Sink III, Henry Clifton, Ankeny, IA Iowa 50021 (US); Thomas, Clark Steel, Cambridge, IA 50046 (US); Berberich, Micah Joel, Urbandale, IA 50322 (US)
(74) Vertreter: Holst, Sönke

(56) Entgegenhaltungen:
- EP-A- 0 464 291
- EP-A- 1 070 455
- FR-A- 2 560 533
- FR-A- 2 595 205
- FR-A- 2 813 754
- US-A- 4 427 154
- US-A- 5 992 759

## Beschreibung

Die Erfindung betrifft eine Gestängekonstruktion für ein landwirtschaftliches Gerät zur Bewegung über ein Feld in eine Bewegungsrichtung, mit einem ersten und einem zweiten sich quer zur Bewegungsrichtung erstreckenden Träger, einem sich quer zur Bewegungsrichtung erstreckenden und unterhalb des ersten und zweiten Trägers beabstandet angeordneten dritten Träger und quer zu den Trägern zueinander beabstandet angeordneten Stützelementen, wobei die Träger als Rohre ausgebildet sind und die Stützelemente, bezogen auf eine parallel zur Bewegungsrichtung ausgerichtete Querschnittsebene der Gestängekonstruktion, die Träger in einer im Wesentlichen dreieckförmigen Stellung zueinander derart abstützen, dass der erste und zweite Träger in der Querschnittsebene auf einer eine Oberseite der Gestängekonstruktion definierenden Grundseite eines Dreiecks liegen. Des Weiteren betrifft die Erfindung ein Verfahren zur Herstellung einer Gestängekonstruktion.

Das Bestreben danach die Produktivität zu erhöhen und Arbeitsgänge auf dem Feld zu reduzieren führte dazu, dass Arbeitswerkzeuge mit faltbaren Gestängen, wie z. B. Feldspritzen, für größere Arbeitsbreiten und höhere Arbeitsgeschwindigkeiten ausgelegt wurden. Gestänge, welche ausgefaltet Arbeitsbreiten aufweisen, die 36 Meter (120 Fuß) und mehr betragen, sind gegenwärtig erhältlich. Mit der Zunahme von Arbeitsweiten, Gewicht und Arbeitsgeschwindigkeiten ist eine Zunahme der Trägheitslast verbunden. Die Konstruktion eines breiten Gestänges, mit reduziertem Gewicht, einfacher und reproduzierbarer Herstellbarkeit und struktureller Stabilität und Steifigkeit wurde ein immer größer werdendes Problem.

Die breiten Gestänge müssen faltbar sein, um eine schmale Transportweite zu erzielen. Horizontales Falten führt zwar zu geringen Falthöhen, verursacht aber extrem hohe Torsionsspannungen an der Gestängekonstruktion. Bei horizontal gefalteten Gestängen ist das Tiefenmaß des Gestänges gewöhnlich minimiert, was zu einer geringeren Stabilität und Steifigkeit des Gestänges in Fahrzeuglängsrichtung führt. Senkrechtes Falten reduziert zwar die Torsionsspannung kann jedoch bei breiten Gestängen zu unakzeptablen Falthöhen führen.

Eine typische Gestängekonstruktion weist eine dreieckige oder L-förmige Struktur auf, wobei eine Grundseite des Dreiecks oder der untere Schenkel der L-förmigen Struktur auf der Unterseite des Gestänges angeordnet ist. Derartige Aufbauten, welche auf der Unterseite breiter ausgebildet sind als auf der Oberseite, erschweren oftmals die gewünschte Positionierung der Spritzdüsen. Die Möglichkeiten zur Anordnung der Spritzdüsen in gewünschten Abständen werden eingeschränkt oder der Betreiber muss bestimmte Spritzdüsen abseits der Hauptversorgungsleitung versetzen, wodurch oftmals ungleichmäßige Spritzmuster hervorgerufen werden. Bei den L-förmigen Konstruktionen, wird der Hauptanteil der Belastungen in Längsrichtung durch die Hauptunterstreben oder Rohre auf einen mittig angeordneten Trägerrahmen übertragen, wodurch vorteilhaft die Montagen von Gestängefaltzylindern und von Neigungsschwenkvorrichtungen auf der Unterseite ermöglicht werden, wobei die Neigungsschwenkzylinder auf der Oberseite angeordnet sind. Bei Versuchen alternative Konstruktionen umzusetzen traten Schwierigkeiten auf, insbesondere wenn bei alternativen Konstruktionen Belastungen auf die Oberseite des Gestänges übertagen wurden. Wenn Faltzylinder und Schwenklager entsprechend der Belastung des Gestänges in Richtung der Oberseite des Gestänges und des Trägerrahmens verlagert werden, tritt eine Abstandszunahme zwischen der Gestängeunterseite und dem Trägerrahmen ein, sobald der Gestängeabschnitt aufwärts geneigt wird, wohingegen eine Abstandsabnahme eintritt, wenn der Gestängeabschnitt abwärts geneigt wird. Diese Abstandsänderungen können signifikante Probleme bezüglich des Spritzmusters hervorrufen. Demzufolge sind derartige alternative Gestängekonstruktionen mit signifikanten konstruktiven Schwierigkeiten verbunden, die durch Belastungsverlagerungen und Anforderungen an Neigungsverstellung und Faltung hervorgerufen werden.

Gestänge von großer Länge mit rohrförmigen Konstruktionen sind oftmals schwer zu fertigen. Einzelne Rohrabschnitte können mit großen Längen- und Schnittwinkeltoleranzen behaftet sein. Wenn Rohr-an-Rohr-Verbindungen notwendig sind, können derartige Toleranzen das Verschweißen von Rohrenden erschweren und verteuern, wobei die Verbundsicherheit derartiger Rohrendschweißverbindungen nicht optimal ist. Des Weiteren erfordern konventionelle Methoden zur Rohrgestängekonstruktion den Einsatz komplexer und teurer Vorfixiervorrichtungen für das Gestänge.

In der EP 1 070 455 A2 wird eine Gestängekonstruktion für ein landwirtschaftliches Arbeitsgerät offenbart, deren Gestängeträger in einer dreieckförmigen Stellung zueinander angeordnet sind, wobei zwei von ihnen eine obere Fläche der Gestängekonstruktion bilden. Die Gestängekonstruktion ist derart ausgebildet, dass das Gestänge in horizontaler Richtung zum Arbeitsgerät zusammenfaltbar ist, wobei ein äußeres Teil des Gestänges durch Verschwenken in vertikale Richtung optional in eine vertikale Stellung gebracht werden kann. Hierbei ist ein senkrechtes Falten des Gestänges über eine vertikale Stellung hinaus nicht möglich.

Die FR 2 595 205 A1 offenbart ein Spritzengestänge für ein landwirtschaftliches Fahrzeug, welches einen inneren Bereich mit vier und einen äußeren Bereich mit drei Gestängeträgern aufweist, wobei die Gestängeträger im äußeren Bereich in einer dreieckförmigen Stellung zueinander angeordnet sind und zwei von ihnen auf einer oberen horizontal ausgerichteten Fläche des Gestänges liegen. Durch entsprechende Gelenkverbindungen kann der äußere Bereich gegenüber dem inneren Bereich in eine vertikale Stellung gebracht werden und der innere Bereich gegenüber Fahrzeug horizontal verschwenkt werden. Die Gestängeträger des äußeren Bereichs sind durch Stützelemente verbunden, welche einen dreieckförmigen Querschnitt aufweisen und an den Endpunkten jeweils Spannhülsen aufweisen, durch die die Gestängeträger durchgeführt und mittels Verschraubungen eingespannt werden. Nachteilig wirkt sich aus, dass die hier offenbarte Art und Weise der Gestängekonstruktion aufwändig und kostenintensiv ist und ein komplettes Zusammenfalten des Gestänges nicht ermöglicht wird.

Die der Erfindung zugrunde liegende Aufgabe wird darin gesehen, eine Gestängekonstruktion der eingangs genannten Art anzugeben, durch welche die vorgenannten Probleme überwunden werden.

Die Aufgabe wird erfindungsgemäß durch die Lehre der Patentansprüche 1 und 15 gelöst. Weitere vorteilhafte Ausgestaltungen und Weiterbildungen der Erfindung gehen aus den Unteransprüchen hervor.

Erfindungsgemäß wird eine Gestängekonstruktion der eingangs genannten Art derart ausgebildet, dass die Stützelemente zur Aufnahme der Träger als Rasteinrichtungen ausgebildete Aussparungen aufweisen, mit denen die Träger beim Zusammenbau vorfixierbar sind, so dass ein Zusammenbau der Träger mit den Stützelementen unabhängig von der Verwendung von Vorfixierungseinrichtungen erleichtert wird.

Eine einfach zu fertigende Gestängekonstruktion, insbesondere geeignet für große landwirtschaftliche Faltgestänge, umfasst eine Vielzahl von Stützelementen für Haupttragrohre, welche aus Blechmaterial mit unterschiedlichen Dicken gefertigt werden und welche entsprechend der vom Material zu tragenden Belastungen unterschiedlich ausgebildete Bereiche aufweisen. Dickeres, hochfestes oder hochvergütetes Material wird nur in hochbeanspruchten Bereichen verwendet, so dass Kosten und Gewicht reduziert und Gewichtsverteilung und Festigkeit verbessert werden. Das Material kann aus lasergeschnittenem Stahl gefertigt und unter Verwendung von Laschen-SchlitzVerbindungen zusammengefügt werden, so dass ein Stützelement geschaffen wird, das wesentlich präziser ausgebildet ist, als bei gesägtem Material. Die Stützelemente für die Rohre weisen Öffnungen oder Aussparungen auf, welche vorbereitende Aufnahmen für die Hauptrohre bilden, um die Notwendigkeit von zusätzlichen Vorfixierungsvorrichtungen zu reduzieren, so dass Werkzeug- und Fertigungskosten gegenüber den meisten herkömmlichen Gestängekonstruktionen reduziert werden können. Die gegenüberliegenden Endbereiche von Diagonalrohren werden durch in den gefertigten Stützelementen ausgebildete Öffnungen geführt, anstatt diese auf der Oberfläche der Bleche anliegend anzupassen. Dadurch können die Diagonalrohre präziser angeordnet werden, ohne dass teure und komplizierte Vorfixierungsvorrichtungen eingesetzt werden müssen. Die Toleranzen bezüglich der Länge und der Schnittwinkel der Endbereiche der Diagonalrohre können wesentlich größer ausfallen, als es bei Aufbauten der Fall sein darf, bei denen die Rohrenden in Stoßverbindungen aufeinander oder auf Blechoberflächen verbunden werden. Dadurch, dass die Rohrendbereiche tatsächlich durch die Stützelemente hindurch gesteckt werden, kann jeder Rohrendbereich an entsprechend geeigneten Stellen von an den Stützelementen gegenüberliegenden Seiten verschweißt werden. Durch Vermeidung der meisten oder aller Rohr-an-Rohr-Verbindungen und Verbindungen, bei denen eine Schnittkante präzise gegenüber einer planaren Oberfläche ausgerichtet werden muss, kann die Schweißfertigung schneller, einfacher und zuverlässiger ausgeführt werden, als es zumindest bei den meisten bisher erhältlichen Gestängekonstruktionen der Fall ist. Bei der Ausführung von Diagonalrohrverbindungen mit benachbarten Stützelementen werden Schweißverbindungen, die an Zwischenstellen auf den Diagonalrohren notwendig sind, vermieden.

Der Querschnitt der erfindungsgemäßen Gestängekonstruktion ist als umgekehrtes rechtwinkliges Dreieck ausgebildet mit der Grundseite des Dreiecks auf der Oberseite des Gestänges. Die Spitze des dreieckigen Querschnitts ist auf der Unterseite des Gestänges angeordnet und der in Vorwärtsrichtung weisende Bereich des Gestänges liegt im Wesentlichen auf einer senkrechten Ebene. Die umgekehrte Aufbau ermöglicht eine verbesserte Positionierung von Düsen und Rohrleitungen, von denen viele außerhalb des Querschnittsbereichs des Gestänges angeordnet werden können und dadurch die Aufwärts-Falteigenschaften eines Gestängebereichs im Vergleich zu anderen Gestängekonstruktionen verbessert werden. Eine innen angeordnete Rohrversteifungs-Gelenkkonstruktion trägt zur Realisierung eines umgekehrten Aufbaus bei und ermöglicht es, den Gestängefaltzylinder und die Neigungsverstelleinrichtung nahe der Unterseite und den Neigungsverstellzylinder nahe der Oberseite des Gestänges anzuordnen, so dass bei Neigungsschwenkbewegungen Überlappungen oder Lücken im Spritzmuster vermeidbar sind. Die obere weitere Grundseite des dreieckigen Querschnitts verbessert die Festigkeit und Steifheit des Gestänges und erlaubt es, falls gewünscht, Stahl im gesamten Gestängebereich zu verwenden, an Stelle von teureren leichteren Materialien, mit denen oftmals Schwierigkeiten bei der Herstellung der Verbindungsstellen auftreten. Eine Aufwärtsfaltung des äußeren Gestängeabschnitts ermöglicht für die Gestängekonstruktion eine maximale Tiefendimensionierung und eine maximale Festigkeit in Längsrichtung.

Die Vorteile einer erfindungsgemäßen Gestängekonstruktion liegen darin, dass er leicht und dennoch stabil ausgebildet ist und eine hohe Festigkeit aufweist. Des Weiteren ist es vorteilhaft, dass die Gestängekonstruktion leicht und kostengünstig zu fertigen ist. Weitere Vorteile liegen darin, dass Werkzeugkosten reduziert werden konnten. Des Weiteren werden bei der Fertigung benötigte Vorfixierungsvorrichtung eingespart und in Verbindung mit Schnittkantentoleranzen und Rohr-an-Rohr-Verbindungen auftretende Probleme reduziert oder eliminiert. Ferner weist die Gestängekonstruktion gewichts- und festigkeitsoptimierte Stützelemente auf.

Des Weiteren erfolgt gegenüber den meisten konventionellen Gestängekonstruktionen eine optimierte Platzierung von Düsen oder Ausgabeeinheiten und von Versorgungsrohrleitungen. Die erfindungsgemäße Gestängekonstruktion ist auf der Oberseite breiter ausgebildet als auf der Unterseite und weist verbesserte Festigkeitseigenschaften in Längsrichtung auf. Insbesondere ist die Gestängekonstruktion hinsichtlich eines Aufwärtszusammenfaltens vorteilhaft konfiguriert und überwindet hinsichtlich Neigungsverstellung und Zusammenfalten Konstruktionsprobleme, die durch Gestängekonfigurationen, bei denen Belastungen auf die Oberseite übertragen werden, auftreten können.

Anhand der Zeichnungen, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine perspektivische Hinteransicht eines Teils einer faltbaren Gestängekonstruktion von hinten,
- Fig. 2: eine vergrößerte perspektivische Ansicht eines inneren Gestängeabschnitts des Aufbaus aus Fig. 1,
- Fig. 3: eine vergrößerte perspektivische Hinteransicht eines Teils des inneren Gestängeabschnitts aus Fig. 2,
- Fig. 4: eine Vorderansicht des Teils des inneren Gestängeabschnitts aus Fig. 3,
- Fig. 5: eine Seitenansicht des linken Endbereichs des Teils des inneren Gestängeabschnitts aus Fig. 3,
- Fig. 6: eine Hinteransicht des Teils des inneren Gestängeabschnitts aus Fig. 3,
- Fig. 7: eine Ansicht des in Fig. 3 gezeigten Teils des inneren Gestängeabschnitts von oben,
- Fig. 8: eine Seitenansicht des rechten Endbereichs des Teils des inneren Gestängeabschnitts aus Fig. 3,
- Fig. 9: eine Ansicht des in Fig. 3 gezeigten Teils des inneren Gestängeabschnitts von unten,
- Fig. 10: eine perspektivische Ansicht eines gefertigten Rohrverbindungsteils für den inneren Gestängeabschnitt aus Fig. 2,
- Fig. 11: eine vergrößerte perspektivische Ansicht eines inneren Gelenkbereichs des Gestängeabschnitts aus Fig. 2 mit einer Torsionsrohr-Gelenkkonstruktion und
- Fig. 12: eine Seitenansicht in teilweiser Querschnittdarstellung des Gelenkbereichs aus Fig. 11.

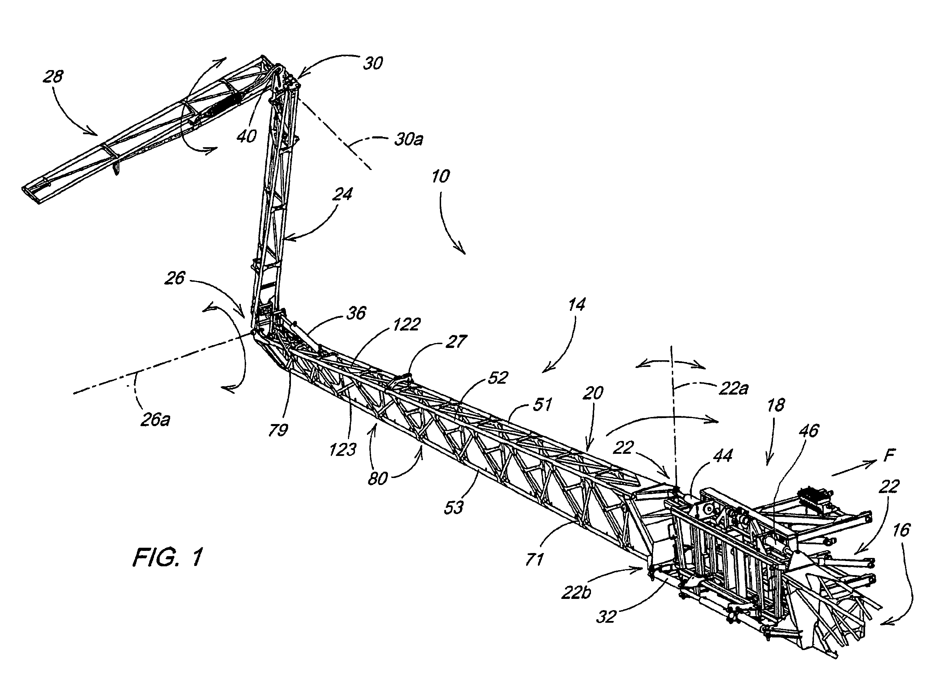

Figur 1 zeigt einen Teil eines landwirtschaftlichen Gerätes 10, welches beispielhaft als Anbaufeldspritze ausgebildet und zum Besprühen eines Feldes in Vorwärtsrichtung (F) betreibbar ist. Das Gerät 10 weist rechte und linke Gestängekonstruktionen 14, 16 auf, die von einem Fahrzeug oder einem Anhänger (nicht gezeigt) an einem Heberahmen oder einem mittig angeordneten Tragrahmen 18 getragen werden. Die Gestängekonstruktionen 14, 16 sind in ihrer Konstruktion ähnlich ausgebildet und weisen, wie dargestellt, einen inneren Gestängeabschnitt 20 auf, der mit dem Tragrahmen 18 verbunden und um eine senkrechte Achse 22a mittels einer Gelenkkonstruktion 22 verschwenkbar ist, um ein Bewegen zwischen einer ausgestreckten Arbeitsposition (wie dargestellt) und einer in Vorwärtsrichtung zusammengefalteten Position, in der der innere Gestängeabschnitt 20 sich ausgehend vom Trägerrahmen 18 in Vorwärtsrichtung erstreckt, zu ermöglichen. Ein Gestängezwischenabschnitt 24 ist mittels einer Gelenkkonstruktion 26 mit dem äußeren Ende des Gestängeabschnitts 20 verbunden und zwischen einer sich nach außen erstreckenden Arbeitsstellung und einer Transportstellung, in der der Gestängezwischenabschnitt 24 auf einem an der Oberseite des Gestängeabschnitts 20 angeordneten Anschlag 27 aufliegt, um eine im Wesentlichen horizontale Achse 26a verschwenkbar. Ein äußerer Gestängeabschnitt 28 ist mittels einer Anfahrschutz-Gelenkkonstruktion 30 schwenkbar mit dem außen liegenden Endbereich des Gestängezwischenabschnitts 24 verbunden und kann um eine Achse 30a in eine auf der Hinterseite des Gestängezwischenabschnitts 24 anliegende Transportstellung gefaltet werden. Der integrierte Anfahrschutz 30 des äußeren Gestängeabschnitts 28 erlaubt ein Abknicken der Spitze der Gestängekonstruktion 14, 16 in Rückwärtsrichtung, um bei einem Auftreffen auf Hindernisse sich entgegen einer Federvorspannung in Rückwärtsrichtung zu bewegen. Die Spannweite der Gestängekonstruktion 14, 16 kann 36 Meter (ca. 120 feet) oder mehr betragen.

Hydraulisch betriebene Faltzylinder 32, 36, 40 sind mit den Gelenkkonstruktionen 22, 26, 30 verbunden, um das Verstellen der Gestängeabschnitte 20, 24, 28 relativ zueinander und zum Tragrahmen 18 zu ermöglichen. Gestängelage- oder Neigungssteuerzylinder 44, 46 erstrecken sich zwischen dem Tragrahmen 18 und den oberen Bereichen der Gelenkkonstruktionen 22 und verbinden die Gestängekonstruktionen 14, 16 mit dem Tragrahmen 18. Die Gelenkkonstruktionen 22 weisen an Positionen 22b Verbindungsglieder auf, um welche die Gestängekonstruktionen 14, 16 sowohl faltbar als auch in der Neigung verstellbar sind. Die Position 22b ist nahe der Unterseite der Gelenkkonstruktion 22 und des Tragrahmens 18 angeordnet und ermöglicht eine Neigungsstellung von näherungsweise 15 Grad um eine Neigungsachse, welche sich horizontal in Längsrichtung erstreckt, wenn die Gestängekonstruktionen 14, 16 sich in der Arbeitsstellung befinden. Die Gelenkkonstruktion 22 ermöglicht des Weiteren eine Faltung von näherungsweise 90 Grad, so dass die Gestängekonstruktionen 14, 16 sich in der Arbeitsstellung in Querrichtung und in der in Vorwärtsrichtung gefalteten Transportstellung in Längsrichtung erstrecken. Auch wenn die Gestängekonstruktionen 14, 16 nur mit drei Gestängeabschnitten 20, 24, 28 dargestellt werden, so eignet sich die im Folgendem beschriebene Gestängekonstruktion für den inneren Gestängeabschnitt 20 auch für andere Arten von Gestängeanordnungen.

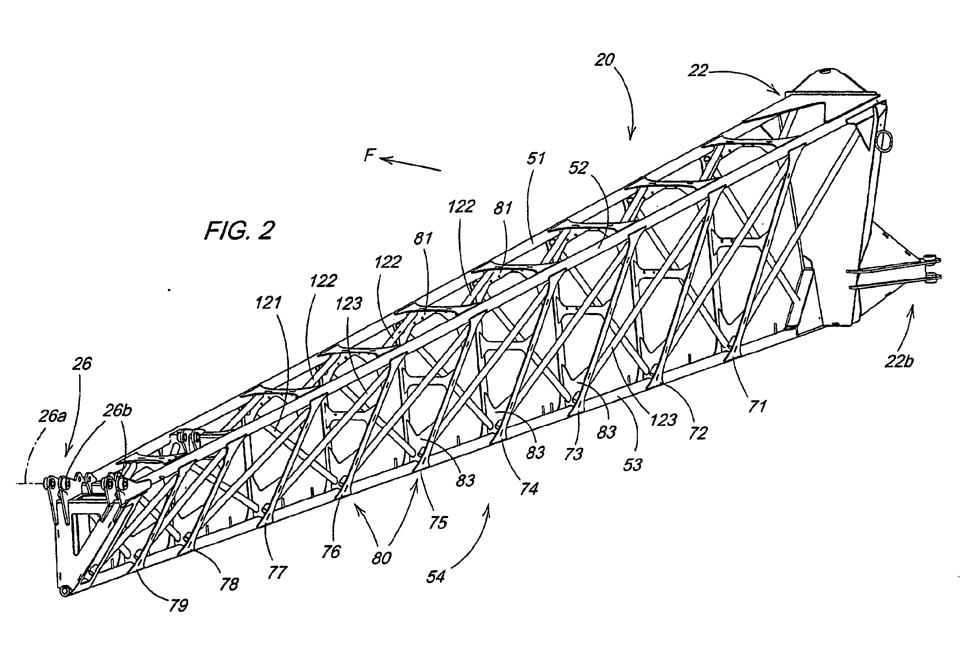

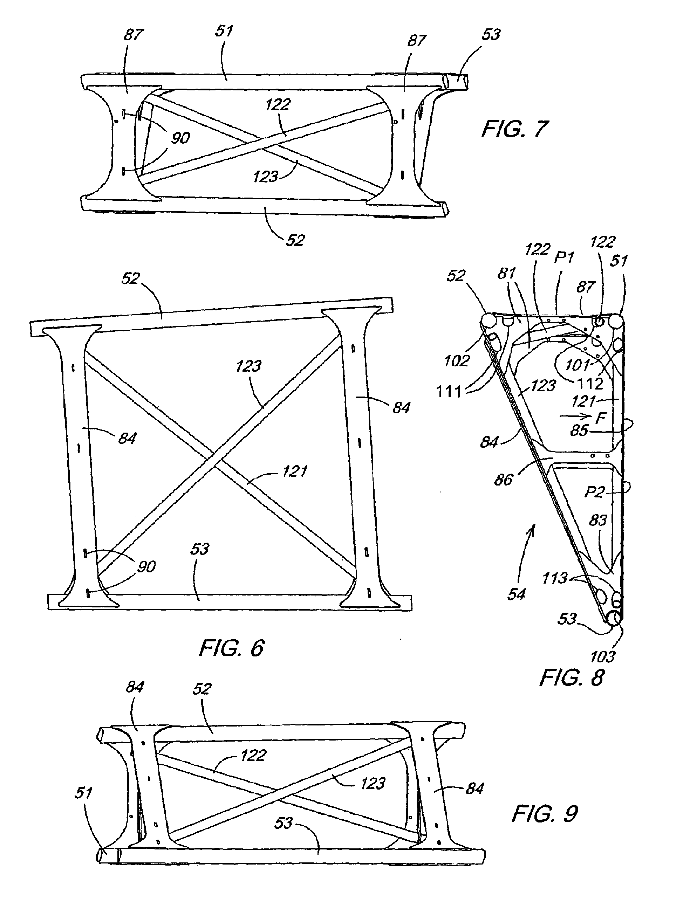

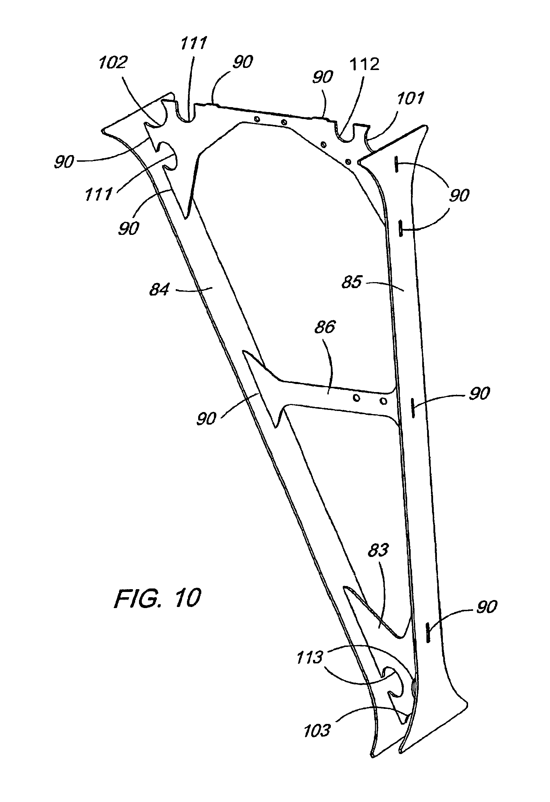

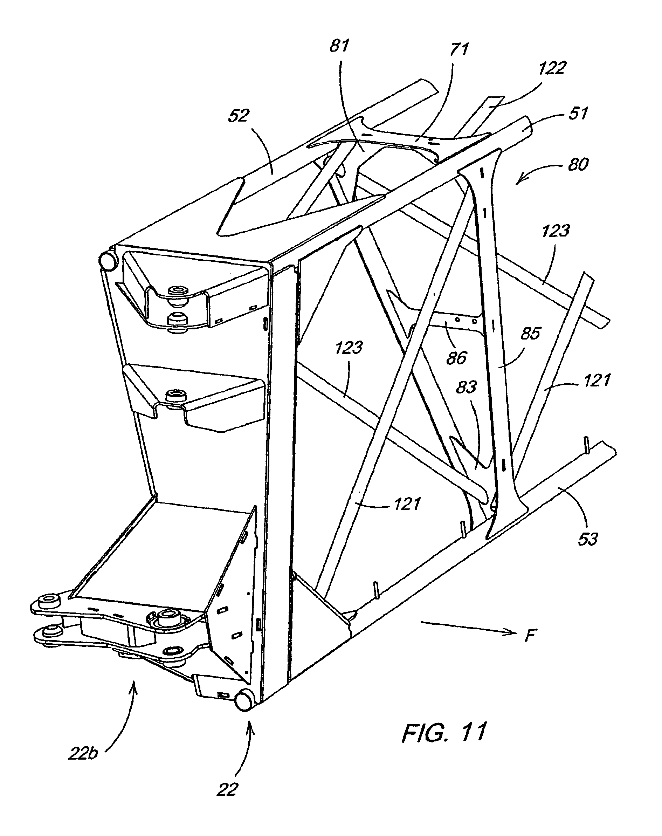

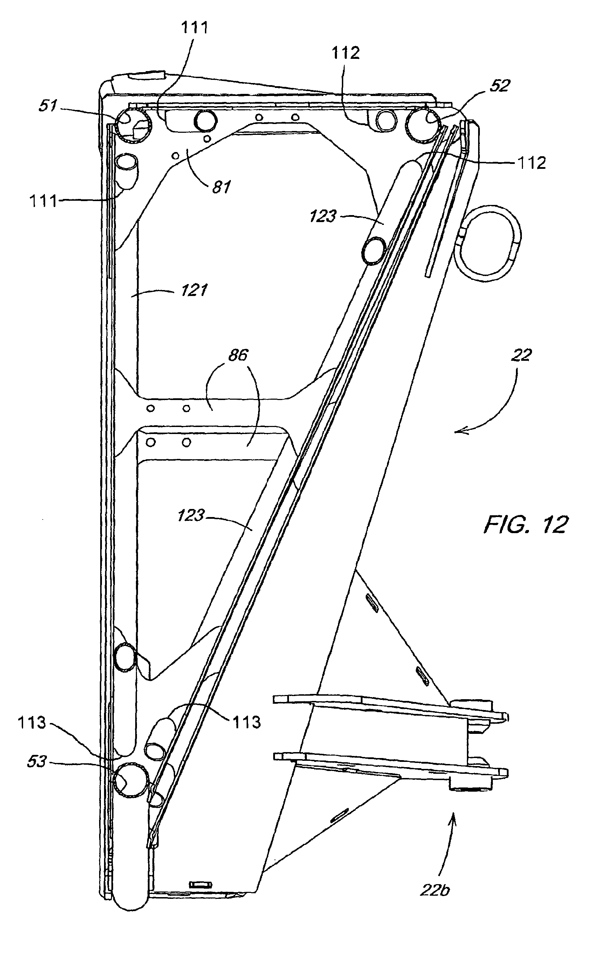

Die Konstruktion des inneren Gestängeabschnitts 20 (siehe Figuren 2 - 12) weist den Querschnitt eines umgekehrten Dreiecks auf. Wie am besten in den Figuren 5 und 8 zu sehen ist, definieren die Träger oder Rohre 51, 52 die Grundseite des Dreiecks und ein unterer Hauptträger oder unteres Rohr 53 die umgekehrte Höhe des Dreiecks. Die Rohre 51, 52, 53 erstrecken sich in Querrichtung zwischen der Gelenkkonstruktion 22 und der Gelenkkonstruktion 26. Wie dargestellt, weist der Querschnitt die Form eines rechtwinkligen Dreiecks auf, wobei die oberen Rohre 51, 52 im Wesentlichen auf einer horizontal ausgerichteten Ebene P1 liegen und wobei durch das untere Rohr 53 und dem oberen Rohr 51 eine senkrecht ausgerichtete Ebene P2 definiert wird. Die senkrechte Ebene P2 erstreckt sich senkrecht zur Vorwärtsrichtung F oder Fahrtrichtung des Gerätes 10, wenn die Gestängekonstruktionen 14, 16 in der nichtgefalteten Stellung bzw. Arbeitsstellung sind. Der dreieckige Querschnitt stellt einen im Wesentlichen unbehafteten Freiraum 54 zu Verfügung, der im Bereich hinter dem unteren Rohr 53 und zwischen den Rohren 51, 52 ausgebildet ist und in dem Versorgungsleitungen oder andere Rohre sowie Materialsprüheinheiten auf vielerlei Art und Weise platziert werden können.

Die Konstruktion des Gestängeabschnitts 20 umfasst eine Vielzahl von Stützelementen 71 bis 79 (siehe Figuren 1 und 2) für die Träger oder Rohre 51, 52, 53, wobei jedes Stützelement 71 bis 79 ähnlich konstruiert ist, jedoch die Abmessungen nach außen hin vom Element 71 zum Element 79 abnehmen. Jedes der Stützelemente 71 bis 79 ist als Teilschweißkonstruktion 80 ausgebildet und weist einen oberen Steg 81, einen unteren Steg 83, ein hinteres Flanschstück 84, ein vorderes Flanschstück 85, ein mittleres Verbindungsstück 86 und ein oberes Flanschstück 87 auf. Die Schweißkonstruktion 80 weist einen 1-förmigen Querschnitt auf, mit einem engen unteren Extrem und einem breiten oberen Extrem. Mittels lasergefertigter Laschen-Schlitzverbindungen mit leichtem Übermaß, die an den mit 90 gekennzeichneten Verbindungsstellen vorgesehen sind, können die Laschen in die Schlitze exakt positioniert werden, um die Schweißkonstruktion zusammenzufügen.

Die oberen und unteren Stege 81, 83 weisen exakt gefertigte Aussparungen 101, 102, 103 auf, die entsprechend der Form der äußeren Oberfläche der Rohre 51, 52, 53 ausgebildet sind. Nachdem die Flanschstücke 84, 85, 87 mit den Stegen 81, 83 zusammengeschweißt sind, definieren die Aussparungen 101, 102, 103 zusammen mit den leicht ausgeweiteten Endbereichen der Flanschstücke 84, 85, 87 Öffnungen, die geringfügig kleiner sind als die Querschnittsfläche der Rohre 51, 52, 53, so dass die Rohre 51, 52, 53 während des Zusammenbaus der Gestängeabschnitte 20 fest an den entsprechenden Stellen an den Stützelementen 71 bis 79 platziert und anschließend mit der Teilschweißkonstruktion 80 verschweißt werden können. Damit kann im Vergleich zu den meisten gängigen Gestängefertigungsmethoden die Anzahl und Komplexität der zur Fertigung erforderlichen Vorfixiervorrichtungen wesentlich reduziert werden. Des Weiteren können die Materialdicke, die Materialgüte und/oder die Materialfestigkeit, entsprechend der Belastungen, die auf die Konstruktion wirken, variiert werden, so dass Kosten, Gewicht und der gesamte Bereich der Teilschweißkonstruktion 80 optimiert werden können. Beispielsweise können die oberen und unteren Stege 81, 83, welche schweren Belastungen seitens der Rohre 51, 52, 53 ausgesetzt sind, aus einem Stahl mit Gütegrad 80 und 2,235 mm (0,088 Zoll) dick gefertigt werden, während die Flanschstücke 84, 85, 87 und die Verbindungsstücke 86, welche weitaus geringeren Belastungen ausgesetzt sind, aus einem Stahl niedrigeren Gütegrads und dünner ausgebildet sein können, wie z.B. 1,905 mm (0,075 Zoll) dick mit einem Gütegrad 50.

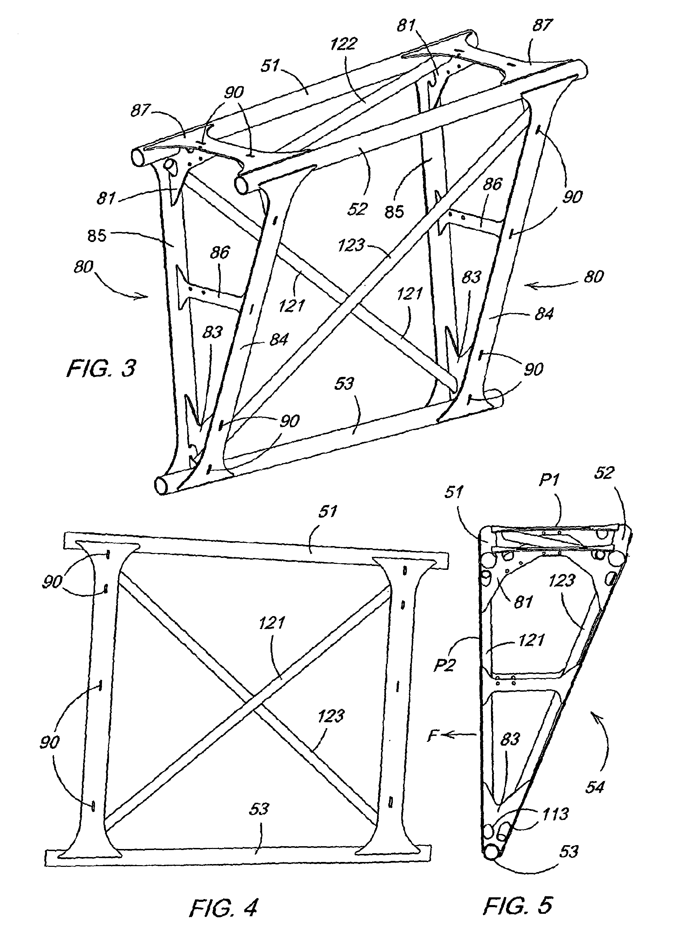

Die oberen und unteren Stege 81, 83 weisen Öffnungen oder Aussparungen 111, 112, 113, in denen Diagonalrohre oder Streben 121, 122, 123 aufgenommen werden, die sich zwischen nebeneinander liegenden Stützelementen 71 bis 79 der Teilschweißkonstruktion 80 erstrecken. Die Streben 121, 122, 123 erstrecken sich durch die Aussparungen 111, 112, 113 und sind durch Schweißnähte, welche sich entlang des Umfangs der Strebenendbereiche beidseitig der Stege 81, 83 erstrecken, mit den Stegen 81, 83 fest verbunden. Die Streben 121, 122, 123 können ohne der Verwendung von Vorfixiervorrichtungen und ohne präzise Längenschnitte und Trennschnitte präzise positioniert werden. Dadurch, dass sich die Endbereiche der Rohre 121, 122, 123 durch die Stege 81, 83 erstrecken, kann jeder Endbereich auf gegenüberliegenden Seiten der Stege 81, 83 an geeigneten Stellen verschweißt werden. Rohr an Rohr Verbindungen und Verbindungen in denen ein abgeschnittenes Ende präzise an eine planare Oberfläche positioniert werden muss, können vermieden werden, indem die oben beschriebene Konfiguration eingesetzt wird. Wie in den Figuren 2 und 3 dargestellt, wird eine Fachwerkskonstruktion geschaffen, wobei bezüglich der oberen Strebe 122 ein außen liegender Endbereich neben dem hinteren oberen Rohr 52 und ein innen liegender Endbereich neben dem vorderen oberen Rohr 51 mit dem Steg 81 verbunden ist. Der obere innen liegende Endbereich des Diagonalrohrs 123 ist neben dem außen liegenden Endbereich der oberen Strebe 122 mit dem Steg 81 verbunden. Jedes vordere Diagonalrohr 121 umfasst einen außen liegenden oberen Endbereich, welcher neben dem innen liegenden Endbereich der oberen Strebe 122 mit dem Steg 81 verbunden ist, und einen unteren innen liegenden Endbereich, welcher neben dem unteren außen liegenden Endbereich des sich zwischen dem unteren Rohr 53 und dem oberen Rohr 51 erstreckenden Diagonalrohres 123 mit dem Steg 83 verbunden ist. Wie dargestellt ist, erstrecken sich die Diagonalrohre 121, 122, 123 zwischen nebeneinander gelegenen Stützelementen 71 bis 79, wobei an mittig gelegenen Stellen der Diagonalrohre 121, 122, 123 keine Verschweißungen erforderlich sind. End-an-End-Verschweißungen der Diagonalrohre 121, 122, 123 und direkte Verschweißungen der Diagonalrohre 121, 122, 123 mit den Rohren 51, 52, 53 können vermieden werden. Die innen gelegene Gelenkkonstruktion 22 überträgt Belastungen vom oberen Teil des Gestängeabschnitts 20 zum unteren Teil des Gestängeabschnitts 20 im Bereich der Gelenkkonstruktion 22 und ermöglicht dadurch eine Anordnung der Schwenk- und Faltkonstruktion nahe der Unterseite der Gestängekonstruktionen 14, 16 und des Tragrahmens 18, um dadurch Probleme hinsichtlich Abstandsänderungen zwischen Gestängekonstruktion 14, 16 und Tragrahmen 18 zu verhindern, wenn die Gestängekonstruktion 14, 16 während Feldarbeiten um die Längsachse neigungsverstellt wird. Die außen liegende Gelenkkonstruktion 26 erlaubt auf vorteilhafte Weise die Positionierung von Schwenkgelenken 26b, die zu den oberen Rohren 51, 52 ausgerichtet sind, so dass ein stabiler Gelenkbereich zum Aufwärts- und Zusammenfalten des Gestängezwischenabschnitts 24 um eine Achse 26a geschaffen wird. Wie dargestellt ist, wird bei den Gelenkkonstruktion 22 und 26 ebenfalls eine Laschen-Schlitzverbindungen eingesetzt, um den Zusammenbau mit einem Minimum an Vorfixiervorrichtung gestalten zu können.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Gestängekonstruktion für ein landwirtschaftliches Gerät (10) zur Bewegung über ein Feld in eine Bewegungsrichtung (F), mit einem ersten und einem zweiten sich quer zur Bewegungsrichtung (F) erstreckenden Träger (51, 52), einem sich quer zur Bewegungsrichtung (F) erstreckenden und unterhalb des ersten und zweiten Trägers (51, 52) beabstandet angeordneten dritten Träger (53) und quer zu den Trägern (51, 52, 53) zueinander beabstandet angeordneten Stützelementen (71 - 79), wobei die Träger (51, 52, 53) als Rohre ausgebildet sind und die Stützelemente (71 - 79), bezogen auf eine parallel zur Bewegungsrichtung (F) ausgerichtete Querschnittsebene der Gestängekonstruktion (14, 16), die Träger (51, 52, 53) in einer im Wesentlichen dreieckförmigen Stellung zueinander derart abstützen, dass der erste und zweite Träger (51, 52) in der Querschnittsebene auf einer eine Oberseite der Gestängekonstruktion (14, 16) definierenden Grundseite eines Dreiecks liegen, **dadurch gekennzeichnet, dass** die Stützelemente (71 - 79) zur Aufnahme der Träger (51, 52, 53) als Rasteinrichtungen ausgebildete Aussparungen (101, 102, 103) aufweisen, mit denen die Träger (51, 52, 53) beim Zusammenbau vorfixierbar sind, so dass ein Zusammenbau der Träger (51, 52, 53) mit den Stützelementen (71 - 79) unabhängig von der Verwendung von Vorfixierungseinrichtungen erleichtert wird.

2. Gestängekonstruktion nach Anspruch 1, **dadurch gekennzeichnet, dass** die Träger (51, 52, 53) innere und äußere Endbereiche aufweisen und der erste und zweite Träger (51, 52) auf einer im Wesentlichen horizontal ausgerichteten Ebene (P1) liegen.

3. Gestängekonstruktion nach einem oder mehreren der vorhergehenden Ansprüche, **dadurch gekennzeichnet, dass** an den äußeren Endbereichen des ersten und zweiten Trägers (51, 52) eine erste Gelenkkonstruktion (26) vorgesehen ist, mit der ein Gestängeabschnitt (24) der Gestängekonstruktion (14, 16) um eine im Wesentlichen horizontale Achse (26a) in Aufwärtsrichtung zusammenfaltbar ist, und dass an den inneren Endbereichen der Träger (51, 52, 53) eine zweite Gelenkkonstruktion (22) vorgesehen ist, mit der die Gestängekonstruktion (14, 16) um eine im Wesentlichen vertikale Achse (22a) in Längsrichtung zusammenfaltbar ist, wobei die zweite Gelenkkonstruktion (22) einen unteren Bereich aufweist, der mit einem Faltzylinder (32) verbindbar ist.

4. Gestängekonstruktion nach einem oder mehreren der vorhergehenden Ansprüche, **dadurch gekennzeichnet, dass** die dreieckförmige Stellung eine umgekehrte rechtwinklige Dreieckstellung darstellt.

5. Gestängekonstruktion nach einem oder mehreren der vorhergehenden Ansprüche, **dadurch gekennzeichnet, dass** der erste und dritte Träger (51, 53) eine in Vorwärtsrichtung vorlaufende senkrechte Fläche (P2) der Gestängekonstruktion (14, 16) definieren.

6. Gestängekonstruktion nach einem oder mehreren der vorhergehenden Ansprüche, **dadurch gekennzeichnet, dass** die Stützelemente (71, - 79) eine Blechstruktur aufweisen, wobei die Blechstruktur in ausgewählten Bereichen unterschiedliche Eigenschaften bezüglich Dicke und/oder Güteklasse und/oder Festigkeit aufweisen.

7. Gestängekonstruktion nach einem oder mehreren der vorhergehenden Ansprüche, **dadurch gekennzeichnet, dass** sich zwischen benachbarten Stützelementen (71 - 79) erstreckende Diagonalstreben (121, 122, 123) vorgesehen sind, welche von an den Stützelementen (71 - 79) eingebrachten Öffnungen (111, 112, 113) aufgenommen und an den Stützelementen (71 - 79) befestigt sind.

8. Gestängekonstruktion nach Anspruch 7, **dadurch gekennzeichnet, dass** die Endbereiche der Diagonalstreben (121, 122, 123) mit den Stützelementen (71 - 79) verschweißt sind.

9. Gestängekonstruktion nach einem der Ansprüche 7 oder 8, **dadurch gekennzeichnet, dass** die Endbereiche der Diagonalstreben (121, 122, 123) sich durch die Stützelemente (71 - 79) erstrecken und an gegenüberliegenden Seiten eines jeweiligen Stützelements (71 - 79) mit diesem verschweißt sind.

10. Gestängekonstruktion nach Anspruch 3, **dadurch gekennzeichnet, dass** die zweite Gelenkkonstruktion (22) als Rohrversteifungs-Gelenkkonstruktion ausgebildet ist, durch welche Belastungen des ersten und zweiten Trägers (51, 52) auf einen unteren Bereich der zweiten Gelenkkonstruktion (22) übertragbar sind.

11. Gestängekonstruktion nach einem der Ansprüche 3 oder 10, **dadurch gekennzeichnet, dass** die zweite Gelenkkonstruktion (22) ein Verschwenken der Gestängekonstruktion (14, 16) um eine im Wesentlichen vertikale Achse (22a) und ein Neigungsverschwenken der Gestängekonstruktion um eine Neigungsachse ermöglicht.

12. Gestängekonstruktion nach Anspruch 3, 10 oder 11, **dadurch gekennzeichnet, dass** die Gestängekonstruktion (14, 16) einen ersten Gestängeabschnitt (20) und einen zweiten Gestängeabschnitt (24) aufweist, wobei die zweite Gelenkkonstruktion (22) am innen gelegenen Endbereich des ersten Gestängeabschnitts (20) angeordnet ist und die erste Gelenkkonstruktion (26) den zweiten Gestängeabschnitt (24) mit dem außen gelegenen Endbereich des ersten Gestängeabschnitts (20) verbindet.

13. Gestängekonstruktion nach Anspruch 12, **dadurch gekennzeichnet, dass** ein Trägerrahmen (18) vorgesehen ist und der erste Gestängeabschnitt (20) relativ zum Trägerrahmen (18) horizontal und der zweite Gestängeabschnitt (24) relativ zum Trägerrahmen (18) vertikal verschwenkbar ist.

14. Gestängekonstruktion nach einem der Ansprüche 12 oder 13, **gekennzeichnet durch** einen dritten Gestängeabschnitt (28) und eine dritte Gelenkkonstruktion (30), wobei die dritte Gelenkkonstruktion (30) den dritten Gestängeabschnitt (28) mit dem äußeren Endbereich des zweiten Gestängeabschnitts (24) schwenkbar um eine relativ zum zweiten Gestängeabschnitt (24) im Wesentlichen horizontale Achse (30a) verbindet.

15. Verfahren zur Herstellung einer Gestängekonstruktion, welche zur Bewegung über ein Feld in einer im Wesentlichen horizontalen Ausrichtung und zum Zusammenfalten in eine kompakte Transportstellung ausgebildet ist, umfassend ein Bereitstellen von langgezogenen Trägern (51, 52, 53), die als Rohre ausgebildet sind, und von Stützelementen (71 - 79) mit einer dreieckförmigen Konfiguration, ein Vorfixieren der Träger (51, 52, 53) in einer im Wesentlichen dreieckförmigen Konfiguration und ein Fixieren der Träger (51, 52, 53) an die Stützelemente (71 - 79), während die Träger (51, 52, 53) in der dreieckförmigen Konfiguration vorfixiert sind, um eine Gestängekonstruktion (14, 16) mit dreieckförmigen Querschnitt zu erhalten, **dadurch gekennzeichnet, dass** an den Eckpunkten der Stützelemente (71 - 79) zur Aufnahme der Träger (51, 52, 53) als Rasteinrichtungen ausgebildete Aussparungen (101, 102, 103) eingebracht werden, mit denen die Träger (51, 52, 53) beim Zusammenbau vorfixierbar sind, indem die Träger (51, 52, 53) in die Aussparungen (101, 102, 103) mehrerer in Querrichtung zur Bewegung beabstandeter Stützelemente (71 - 79) platziert werden, so dass ein Zusammenbau der Träger (51, 52, 53) mit den Stützelementen (71 - 79) unabhängig von der Verwendung von Vorfixierungseinrichtungen erleichtert wird, wobei das Fixieren durch Verschweißen erfolgt.

16. Verfahren nach Anspruch 15, **gekennzeichnet durch**, Einbringen von weiteren Aussparungen (111, 112, 113) in die Stützelemente (71 - 79) neben den Aussparungen (101, 102, 103), Einführen von Diagonalstreben (121, 122, 123) in die weiteren Aussparungen (111, 112, 113) und Verschweißen der Endbereiche der Diagonalstreben (121, 122, 123) mit den Stützelementen (71 - 79) im benachbarten Bereich der weiteren Aussparungen (111, 112, 113).

17. Verfahren nach Anspruch 16, **dadurch gekennzeichnet, dass** das Verschweißen der Endbereiche der Diagonalstreben (121, 122, 123) ein Verschweißen der Endbereiche mit benachbarten Stützelementen (71 - 79) umfasst.

18. Verfahren nach einem der Ansprüche 15 bis 17, **gekennzeichnet durch**, Herstellen der Stützelemente (71 - 79) aus mehreren einzelnen Teilen (81, 83, 84, 85, 86, 87) aus Blechmaterial, wobei das Blechmaterial sich, entsprechend der Position des jeweiligen Teils (81, 83, 84, 85, 86, 87) innerhalb des Stützelements (71 - 79), in wenigstens der Dicke und/oder der Güteklasse und/oder der Festigkeit unterscheidet.

19. Verfahren nach einem der Ansprüche 15 bis 18, **dadurch gekennzeichnet, dass** das Fixieren der Träger (51, 52, 53) ein Fixieren in einer im wesentlichen umgekehrt rechtwinkligen dreieckigen Konfiguration umfasst, wobei eine Grundseite der rechtwinklig dreieckigen Konfiguration durch zwei auf einer Oberseite der Gestängekonstruktion (14, 16) angeordneten Träger (51, 52) definiert wird.

20. Verfahren nach einem der Ansprüche 15 bis 19, **gekennzeichnet durch**, Anbringen einer ersten Gelenkkonstruktion (24) für eine Vertikalschwenkbewegung an erste Endbereiche der zwei auf der Oberseite angeordneten Träger (51, 52).

21. Verfahren nach Anspruch 20, **gekennzeichnet durch**, Anbringen einer zweiten Gelenkkonstruktion (20) für eine Horizontalschwenkbewegung an die den ersten Endbereichen gegenüberliegenden zweiten Endbereiche der auf der Oberseite angeordneten Träger (51, 52).

## Claims

1. Boom assembly for an agricultural implement (10) for movement over a field in a direction of movement (F), with a first and a second beam (51, 52) extending transversely to the direction of movement (F), a third beam (53) extending transversely to the direction of movement (F) and arranged at a distance below the first and second beam (51, 52), and support elements (71-79) spaced from one another transversely to the beams (51, 52, 53), wherein the beams (51, 52, 53) are configured as tubes and the support elements (71-79) support the beams (51, 52, 53) in a substantially triangular configuration, on the basis of a cross-sectional plane of the boom assembly (14, 16) oriented parallel to the direction of movement (F), in such a way that the first and second beams (51, 52) lie in the cross-sectional plane on a base side of a triangle defining an upper side of the boom assembly (14, 16), **characterised in that** to receive the beams (51, 52, 53), the support elements (71-79) have slots (101, 102, 103) configured as catch means, with which the beams (51, 52, 53) can be pre-fastened during assembly, so that an assembly of the beams (51, 52, 53) with the support elements (71-79) is facilitated independently of pre-fastening means.

2. Boom assembly according to Claim 1, **characterised in that** the beams (51, 52, 53) have inner and outer end regions, and the first and second beam (51, 52) lie on a substantially horizontally oriented plane (P1).

3. Boom assembly according to one or more of the preceding claims, **characterised in that** a first hinge structure (26) is provided on the outer end regions of the first and second beam (51, 52), with which a boom section (24) of the boom assembly (14, 16) can be folded around a substantially horizontal axis (26a) in upward direction, and that a second hinge structure (22) is provided on the inner end regions of the beams (51, 52, 53), with which the boom assembly (14, 16) can be folded around a substantially vertical axis (22a) in the longitudinal direction, wherein the second hinge structure (22) has a lower region, which can be connected to a fold cylinder (32).

4. Boom assembly according to one or more of the preceding claims, **characterised in that** the triangular configuration constitutes an inverted right-angled triangle configuration.

5. Boom assembly according to one or more of the preceding claims, **characterised in that** the first and third beams (51, 53) define a perpendicular face (P2) of the boom assembly (14, 16) facing in the forward direction.

6. Boom assembly according to one or more of the preceding claims, **characterised in that** the support elements (71-79) have a plate structure, wherein the plate structures have different properties with respect to thickness and/or quality grade and/or strength in selected regions.

7. Boom assembly according to one or more of the preceding claims, **characterised in that** diagonal brace members (121, 122, 123) extending between adjacent support elements (71-79) are provided, which are received by openings (111, 112, 113) provided on the support elements (71-79) and fastened to the support elements (71-79).

8. Boom assembly according to Claim 7, **characterised in that** the end regions of the diagonal brace members (121, 122, 123) are welded to the support elements (71-79).

9. Boom assembly according to one of Claims 7 or 8, **characterised in that** the end regions of the diagonal brace members (121, 122, 123) extend through the support elements (71-79) and are welded to a respective support element (71-79) on opposite sides thereof.

10. Boom assembly according to Claim 3, **characterised in that** the second hinge structure (22) is configured as a tube reinforcement hinge structure, through which stresses of the first and second beam (51, 52) can be transferred to a lower region of the second hinge structure (22).

11. Boom assembly according to one of Claims 3 or 10, **characterised in that** the second hinge structure (22) allows pivoting of the boom assembly (14, 16) around a substantially vertical axis (22a) and inclined pivoting of the boom assembly around a tilt axis.

12. Boom assembly according to Claim 3, 10, or 11, **characterised in that** the boom assembly (14, 16) has a first boom section (20) and a second boom section (24), wherein the second hinge structure (22) is arranged on the inside end region of the first boom section (20) and the first hinge structure (26) connects the second boom section (24) to the outside end region of the first boom section (20).

13. Boom assembly according to Claim 12, **characterised in that** a support assembly (18) is provided and the first boom section (20) can be pivoted horizontally relative to the support assembly (18) and the second boom section (24) can be pivoted vertically relative to the support assembly (18).

14. Boom assembly according to one of Claims 12 or 13, **characterised by** a third boom section (28) and a third hinge structure (30), wherein the third hinge structure (30) connects the third boom section (28) to the outer end region of the second boom section (24) to pivot around an axis (30a) that is substantially horizontal relative to the second boom section (24).

15. Method for the production of a boom assembly, which is configured for movement over a field in a substantially horizontal orientation and for folding into a compact transport position, comprising provision of elongated beams (51, 52, 53), which are configured as tubes, and of support elements (71-79) with a triangular configuration, pre-fastening of the beams (51, 52, 53) in a substantially triangular configuration and fastening of the beams (51, 52, 53) to the support elements (71-79), while the beams (51, 52, 53) are pre-fastened in the triangular configuration to obtain a boom assembly (14, 16) with a triangular cross-section, **characterised in that** slots (101, 102, 103) in the form of catch arrangements are provided at the corner points of the support elements (71-79) to receive the beams (51, 52, 53), with which the beams (51, 52, 53) can be pre-fastened during assembly by the beams (51, 52, 53) being placed into the slots (101, 102, 103) of several support elements (71-79) spaced in transverse direction to the movement, so that an assembly of the beams (51, 52, 53) with the support elements (71-79) is facilitated independently of the use of pre-fastening means, wherein fastening is achieved by welding.

16. Method according to Claim 15, **characterised by** the provision of further slots (111, 112, 113) in the support elements (71-79) next to the slots (101, 102, 103), insertion of diagonal braces (121, 122, 123) into the further slots (111, 112, 113) and welding of the end regions of the diagonal braces (121, 122, 123) to the support elements (71-79) in the adjacent region of the further slots (111, 112, 113).

17. Method according to Claim 16, **characterised in that** the welding of the end regions of the diagonal braces (121, 122, 123) includes welding of the end regions to the adjacent support elements (71-79).

18. Method according to one of Claims 15 to 17, **characterised by** the production of support elements (71-79) from several individual parts (81, 83, 84, 85, 86, 87) made of sheet material, wherein, in accordance with the position of the respective part (81, 83, 84, 85, 86, 87) inside the support element (71-79), the sheet material differs at least in thickness and/or quality grade and/or strength.

19. Method according to one of Claims 15 to 18, **characterised in that** the fastening of the beams (51, 52, 53) includes fastening in a substantially inverted right-angled triangle configuration, wherein a base side of the right-angled triangle configuration is defined by two beams (51, 52) arranged on the upper side of the boom assembly (14, 16).

20. Method according to one of Claims 15 to 19, **characterised by** the attachment of a first hinge structure (24) for a vertical pivoting movement to first end regions of the two beams (51, 52) arranged on the upper side.

21. Method according to Claim 20, **characterised by** attachment of a second hinge structure (20) for a horizontal pivoting movement to the second end regions of the two beams (51, 52) arranged on the upper side located opposite the first end regions.

## Revendications

1. Structure en treillis pour une machine agricole (10), destinée à être déplacée sur un champ dans une direction de déplacement (F), comportant un premier et un deuxième longeron (51, 52) qui s'étendent perpendiculairement à la direction de déplacement (F), un troisième longeron (53) qui s'étend perpendiculairement à la direction de déplacement (F) et est agencé à distance en dessous du premier et du deuxième longeron (51, 52), et des éléments de support (71 - 79), disposés perpendiculairement aux longerons (51, 52, 53) et à distance les uns des autres, les longerons (51, 52, 53) étant réalisés sous forme de tubes et les éléments de support (71 - 79) supportant les longerons (51, 52, 53), par rapport à un plan de section de la structure en treillis (14, 16), orienté parallèlement à la direction de déplacement (F), en étant positionnés entre eux sensiblement en forme de triangle, de telle sorte que le premier et le deuxième longeron (51, 52) sont situés dans le plan de section sur une base d'un triangle définissant le côté supérieur de la structure en treillis (14, 16), **caractérisée en ce que** les éléments de support (71 - 79), en vue de recevoir les longerons (51, 52, 53), comportent des évidements (101, 102, 103) formant des systèmes d'enfichage, avec lesquels les longerons (51, 52, 53) peuvent être pré-assemblés au moment du montage, de telle sorte qu'un montage des longerons (51, 52, 53) avec les éléments de support (71 - 79) est facilité indépendamment de l'utilisation de systèmes de pré-assemblage.

2. Structure en treillis selon la revendication 1, **caractérisée en ce que** les longerons (51, 52, 53) comportent des zones d'extrémité intérieures et extérieures et le premier et le deuxième longeron (51, 52) sont situés dans un plan (P1) orienté sensiblement horizontalement.

3. Structure en treillis selon une ou plusieurs des revendications précédentes, **caractérisée en ce que**, au niveau des zones d'extrémité du premier et du deuxième longeron (51, 52), il est prévu une première structure d'articulation (26), par laquelle une partie de treillis (24) de la structure en treillis (14, 16) peut être repliée vers le haut autour d'un axe (26a) sensiblement horizontal, et **en ce que**, au niveau des zones d'extrémité intérieures des longerons (51, 52, 53), il est prévu une deuxième structure d'articulation (22), par laquelle la structure en treillis (14, 16) peut être repliée dans le sens longitudinal autour d'un axe (22a) sensiblement vertical, la deuxième structure d'articulation (22) comportant une partie inférieure pouvant être reliée à un vérin de pliage (32).

4. Structure en treillis selon une ou plusieurs des revendications précédentes, **caractérisée en ce que** la position en triangle constitue une position en triangle rectangle inversé.

5. Structure en treillis selon une ou plusieurs des revendications précédentes, **caractérisée en ce que** le premier et le troisième longeron (51, 53) définissent une surface verticale (P2), antérieure par référence à la direction d'avancement, de la structure en treillis (14, 16).

6. Structure en treillis selon une ou plusieurs des revendications précédentes, **caractérisée en ce que** les éléments de support (71 - 79) comportent une structure en tôle, la structure en tôle possédant dans des zones sélectionnées différentes propriétés concernant l'épaisseur et/ou le niveau de qualité et/ou la résistance.

7. Structure en treillis selon une ou plusieurs des revendications précédentes, **caractérisée en ce qu'**il est prévu des entretoises diagonales (121, 122, 123), qui s'étendent entre des éléments de support (71 - 79) adjacents et qui sont reçues dans des orifices (111, 112, 113), ménagés dans les éléments de support (71 - 79), et sont fixées contre les éléments de support (71 - 79).

8. Structure en treillis selon la revendication 7, **caractérisée en ce que** les zones d'extrémité des entretoises diagonales (121, 122, 123) sont soudées aux éléments de support (71 - 79).

9. Structure en treillis selon la revendication 7 ou 8, **caractérisée en ce que** les zones d'extrémité des entretoises diagonales (121, 122, 123) s'étendent à travers les éléments de support (71 - 79) et sont soudées à l'élément de support (71 - 79) concerné sur deux côtés opposés de celui-ci.

10. Structure en treillis selon la revendication 3, **caractérisée en ce que** la deuxième structure d'articulation (22) est réalisée sous forme de structure de renfort tubulaire, par laquelle les charges du premier et du deuxième longeron (51, 52) peuvent être transmises sur une partie inférieure de la deuxième structure d'articulation (22).

11. Structure en treillis selon la revendication 3 ou 10, **caractérisée en ce que** la deuxième structure d'articulation (22) permet un pivotement de la structure en treillis (14, 16) autour d'un axe (22a) sensiblement vertical et un pivotement en inclinaison de la structure en treillis autour d'un axe incliné.

12. Structure en treillis selon la revendication 3, 10 ou 11, **caractérisée en ce que** la structure en treillis (14, 16) comporte une première partie de treillis (20) et une deuxième partie de treillis (24), la deuxième structure d'articulation (22) étant agencée au niveau de la zone d'extrémité intérieure de la première partie de treillis (20) et la première structure d'articulation (26) reliant la deuxième partie de treillis (24) à la zone d'extrémité extérieure de la première partie de treillis (20).

13. Structure en treillis selon la revendication 12, **caractérisée en ce qu'**il est prévu un cadre support (18) et la première partie de treillis (20) est apte à pivoter horizontalement par rapport au cadre support (18) et la deuxième partie de treillis (24) est apte à pivoter verticalement par rapport au cadre support (18).

14. Structure en treillis selon la revendication 12 ou 13, **caractérisée par** une troisième partie de treillis (28) et une troisième structure d'articulation (30), la troisième structure d'articulation (30) reliant la troisième partie de treillis (28) à la zone d'extrémité extérieure de la deuxième partie de treillis (24) de manière à pouvoir pivoter autour d'un axe (30a) sensiblement horizontal par rapport à la deuxième partie de treillis (24).

15. Procédé de réalisation d'une structure en treillis, qui est réalisée pour se déplacer sur un champ dans une orientation sensiblement horizontale et pour être repliée dans une position de transport compacte, comportant une mise à disposition de longerons (51, 52, 53) allongés, qui sont réalisés sous forme de tubes, et d'éléments de support (71 - 79) avec une configuration en triangle, un pré-assemblage des longerons (51, 52, 53) dans une configuration sensiblement triangulaire et une fixation des longerons (51, 52, 53) contre les éléments de support (71 - 79), alors que les longerons (51, 52, 53) sont pré-assemblés dans la configuration triangulaire, pour obtenir une structure en treillis (14, 16) avec une section triangulaire, **caractérisé en ce qu'**au niveau des sommets des éléments de support (71 - 79) sont ménagés des évidements (101, 102, 103), qui sont réalisés sous forme de systèmes d'enfichage pour recevoir les longerons (51, 52, 53) et avec lesquels les longerons (51, 52, 53) sont pré-assemblés au moment du montage, du fait que les longerons (51, 52, 53) sont mis en place dans les évidements (101, 102, 103) de plusieurs éléments de support (71 - 79) écartés dans le sens transversal par rapport au déplacement, de telle sorte qu'un montage des longerons (51, 52, 53) avec les éléments de support (71 - 79) est facilité indépendamment de l'utilisation de systèmes de pré-assemblage, l'assemblage étant réalisé par soudage.

16. Procédé selon la revendication 15, **caractérisé par** la réalisation d'évidements supplémentaires (111, 112, 113) dans les éléments de support (71 - 79) à côté des évidements (101, 102, 103), l'introduction des entretoises diagonales (121, 122, 123) dans les évidements supplémentaires (111, 112, 113) et le soudage des zones d'extrémité des entretoises diagonales (121, 122, 123) avec les éléments de support (71 - 79) dans la zone à proximité des évidements supplémentaires (111, 112, 113).

17. Procédé selon la revendication 16, **caractérisé en ce que** le soudage des zones d'extrémité des entretoises diagonales (121, 122, 123) constitue un soudage des zones d'extrémité avec les éléments de support (71 - 79) adjacents.

18. Procédé selon une ou plusieurs des revendications 15 à 17, **caractérisé par** la réalisation des éléments de support (71 - 79) à partir de plusieurs parties (81, 83, 84, 85, 86, 87) séparées en tôle, la tôle se différenciant au moins par son épaisseur et/ou son niveau de qualité et/ou sa résistance en fonction de la position de la partie concernée (81, 83, 84, 85, 86, 87) à l'intérieur de l'élément de support (71 - 79).

19. Procédé selon une ou plusieurs des revendications 15 à 18, **caractérisé en ce que** la fixation des longerons (51, 52, 53) constitue une fixation dans une configuration sensiblement en triangle rectangle inversé, une base de la configuration en triangle étant définie par deux longerons (51, 52) disposés sur un côté supérieur de la structure en treillis (14, 16).

20. Procédé selon une ou plusieurs des revendications 15 à 19, **caractérisé par** la mise en place d'une première structure d'articulation (24) pour un mouvement de pivotement vertical au niveau des premières zones d'extrémité des deux longerons (51, 52) disposés sur le côté supérieur.

21. Procédé selon la revendication 20, **caractérisé par** la mise en place d'une deuxième structure d'articulation (20) pour un mouvement de pivotement horizontal au niveau des deuxièmes zones d'extrémité, opposées aux premières zones d'extrémité, des longerons (51, 52) disposés sur le côté supérieur.
